Europäisches Patentamt

European Patent Office

Office européen des brevets

(11) Numéro de publication: **0 163 561**
**A1**

## (12) DEMANDE DE BREVET EUROPEEN

(21) Numéro de dépôt: **85400813.3**

(22) Date de dépôt: **25.04.85**

(51) Int. Cl.⁴: **F 16 L 37/10**
**F 16 L 37/24**

(30) Priorité: **26.04.84 FR 8407070**

(43) Date de publication de la demande:
**04.12.85 Bulletin 85/49**

(84) Etats contractants désignés:
**BE CH DE FR IT LI LU NL**

(71) Demandeur: **ETABLISSEMENTS HENRY DUMESNY**
**5, rue de la Croix-Martre B.P. 14**
**F-91121 Palaiseau(FR)**

(72) Inventeur: **Jardet, Jean-Claude**
**26, rue Emile Zola**
**F-28120 Illiers Combray(FR)**

(72) Inventeur: **Blin, Daniel**
**25, rue Joliot Curie**
**F-28120 Illiers Combray(FR)**

(74) Mandataire: **Boivin, Claude**
**9, rue Edouard-Charton**
**F-78000 Versailles(FR)**

(54) Raccord de conduit.

(57) Le raccord de conduit comprend un corps creux (1) comportant un alésage cylindrique dont l'une des portions d'extrémité au moins est lisse et est élargie en (1e) au voisinage de son extrémité extérieure, cette partie élargie étant coaxiable à l'alésage, une gorge annulaire (1g) également coaxiale à l'alésage étant ménagée dans cette partie élargie (1e), un joint d'étanchéité (3), une rondelle d'appui (4), un joint d'étanchéité (3), une rondelle appui (4), et une roudelle de blocage (5) pouvant être introduites dans ladite partie élargie (1e).

La rondelle de blocage (5) a une largeur inférieure à celle de la gorge, une forme et des dimensions lui permettant de s'engager dans la partie élargie (1e) de l'alésage, et comporte un profil intérieur excentré (5b) dont le diamètre est sensiblement égal au diamètre extérieur du tube (6) à relier et qui est disposé de manière à être coaxial au corps (1) de raccord lorsque la rondelle (5) est engagée dans la gorge (1g) et au contact de la paroi de celle-ci par sa partie large.

FIG. 2

EP 0 163 561 A1

- 1 -

La présente invention a pour objet un raccord pour conduit
servant à véhiculer des liquides ou de l'air, dont le montage se fait rapidement, sans soudure, et qui est démontable
et réutilisable.

Le raccord selon l'invention est caractérisé en ce qu'il comprend un corps creux comportant un alésage dont l'une des
portions d'extrémité au moins est lisse et est élargie au
voisinage de son extrémité extérieure, cette partie élargie
étant coaxiale à l'alésage, une gorge annulaire également coaxiale à l'alésage étant ménagée dans cette partie élargie,
un joint d'étanchéité, une rondelle d'appui et une rondelle
de blocage pouvant être introduites dans ladite partie élargie, et en ce que la rondelle de blocage a une largeur inférieure à celle de la gorge, une forme et des dimensions lui
permettant de s'engager dans la partie élargie de l'alésage,
et comporte un profil intérieur excentré dont le diamètre
est sensiblement égal au diamètre extérieur du tube à relier
et qui est disposé de manière à être coaxial au corps du raccord lorsque la rondelle est engagée dans la gorge et au contact de la paroi de celle-ci par sa partie large.

Pour fixer le tube au raccord, il suffit d'engager dans la
partie élargie du corps de celui-ci, le joint, la rondelle
d'appui et la rondelle de blocage, puis d'engager le tube
dans l'ensemble. Du fait de l'excentricité de son contour
intérieur, la rondelle de blocage se déplace radialement et

- 2 -

0163561

s'engage dans la gorge, ce qui l'empêche de ressortir du raccord. Il suffit, pour bloquer le tube, d'exercer une légère traction sur celui-ci. La rondelle de blocage se met en biais en venant se coincer sur le tube, ce qui immobilise celui-ci. Pour retirer le tube, il suffit de remettre la rondelle de blocage dans l'axe du raccord ce qui décoince le tube.

Le corps du raccord peut comporter un épaulement intérieur formant butée pour le tube lors de sa mise en place.

On a décrit ci-après, à titre d'exemples non limitatifs, deux modes de réalisation du raccord selon l'invention, avec référence aux dessins annexés dans lesquels :

- La Figure 1 est une vue en perspective éclatée du raccord, dans un premier mode de réalisation;

- La Figure 2 est une coupe axiale, avant blocage du tube;

- La Figure 3 en est une vue en coupe transversale suivant III-III de la Figure 2;

- La Figure 4 est une vue semblable à la Figure 2, après blocage;

- La Figure 5 est une vue en coupe axiale d'un second mode de réalisation.

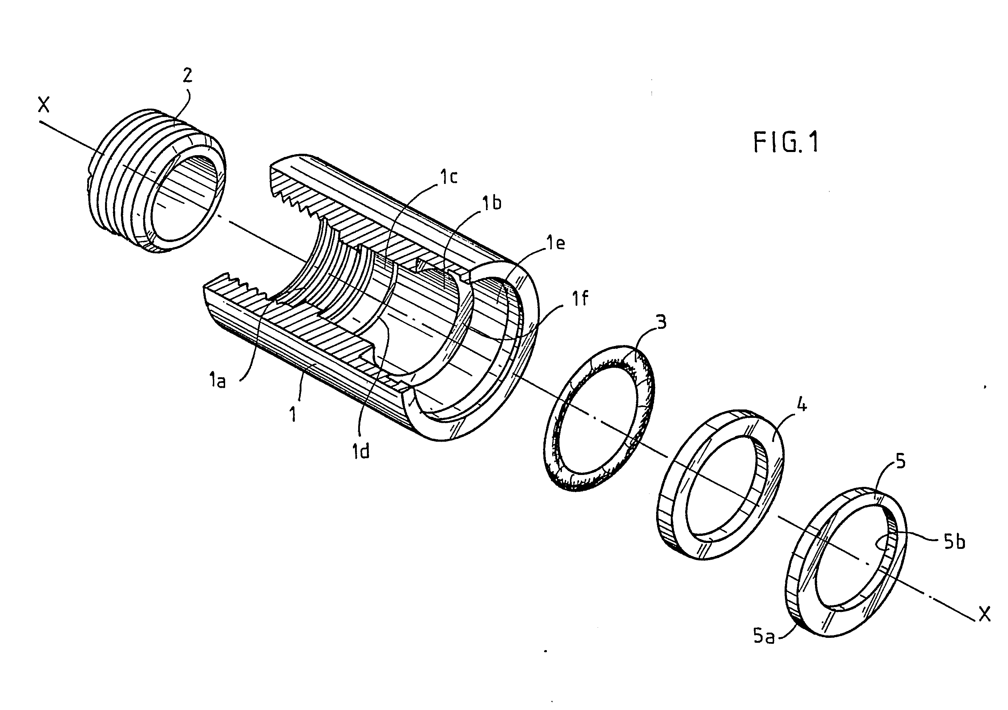

Tel qu'il est représenté aux Figures 1 à 4, le raccord selon l'invention comprend un corps creux 1 dont une extrémité est filetée ou taraudée, comme indiqué en 1a, et est destinée à recevoir l'extrémité taraudée ou filetée d'un tuyau 2.

L'autre extrémité du corps 1 présente un alésage lisse cylindrique 1b, de section circulaire, qui est séparé de la partie 1a par une partie de diamètre réduit 1c délimitant un épaulement 1d. Cette partie 1b est élargie à son extrémité, comme indiqué en 1e, en formant un épaulement annulaire 1f; une gorge 1g est ménagée dans cette partie élargie. La partie élargie 1e et la gorge 1g sont toutes deux coaxiales à la partie 1b.

Le corps 1 est utilisé en association avec un joint d'étanchéité 3, une rondelle d'appui rigide 4 et une rondelle de blocage rigide 5.

- 3 -    **0163561**

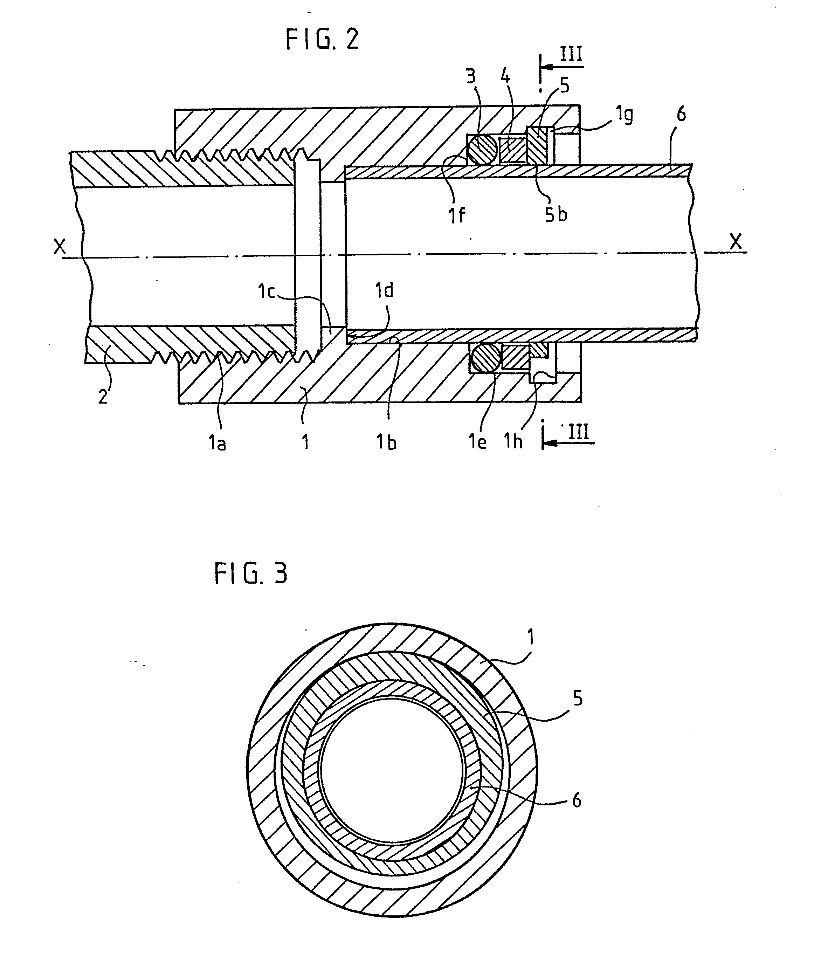

La rondelle d'appui 4 a un diamètre très légèrement inférieur
à celui de la partie élargie 1e de l'alésage 1b du corps 1.
De son côté, la rondelle 5 a une largeur inférieure à celle
de la gorge 1g et un contour extérieur 5a circulaire ou elliptique qui a des dimensions telles que la rondelle puisse
être introduite avec un faible jeu dans la partie élargie 1e.
Dans l'exemple représenté, ce contour est circulaire et a un
diamètre un peu inférieur à celui de cette partie 1e. L'ouverture intérieure 5b de cette rondelle est circulaire et a un
diamètre égal à celui du tube 6 à relier au tuyau 2. Cette ouverture est excentrée par rapport au contour extérieur 5a;
l'excentricité est telle que lorsque, la rondelle 5 est logée
dans la gorge 1e et au contact de la paroi de cette gorge par
sa partie large, l'axe de l'ouverture 5b est confondu avec
l'axe X-X de l'alésage 1b (voir Figure 2). Le joint d'étanchéité 3 a un diamètre extérieur égal à celui de la partie
élargie 1a et un diamètre intérieur égal au diamètre extérieur
du tube 6. Le diamètre de la partie 1b de l'alésage du raccord
est aussi égal à ce diamètre extérieur.

Pour fixer le tube 6 au corps 1, on place dans la partie élargie 1e successivement le joint 3, la rondelle 4 et la rondelle 5. Puis, on introduit le tube 6 dans le corps 1, jusqu'à
ce qu'il vienne buter contre l'épaulement 1d (Figure 2). Lors
de cette opération, la rondelle 5 se déplace radialement, du
fait de l'excentricité de son ouverture 5b, et s'engage dans
la gorge 1g.

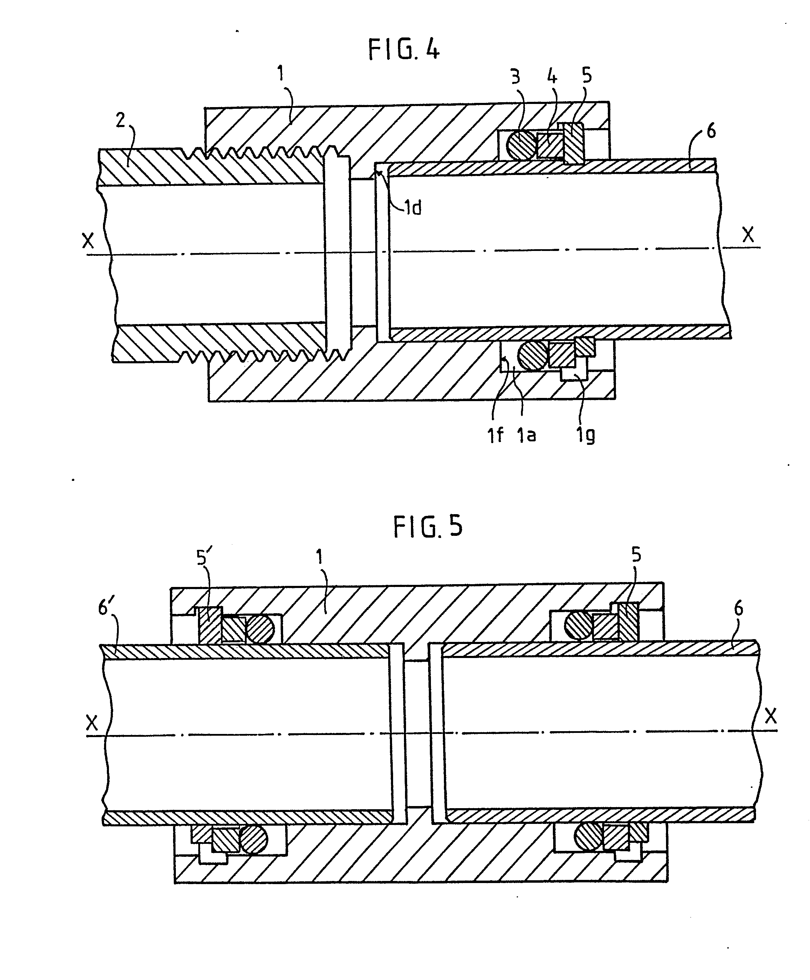

Il ne reste plus qu'à exercer une légère traction sur le tube
6. Celui-ci entraîne la rondelle 5 dont la partie large vient
buter contre la paroi latérale extérieure 1h de la gorge 1g,
ce qui l'empêche de sortir du corps. Mais comme sa partie étroite n'est pas en butée, elle se met en biais et le bord
de son ouverture 5b vient s'ancrer dans le tube 6, ce qui empêche le tube de ressortir du corps 1 (Figure 4). Le tube est
ainsi maintenu dans le raccord, son étanchéité étant assurée
par le joint torique 3.

Pour démonter le raccord, il faut exercer une pression, par
exemple à l'aide d'un tournevis, sur la partie étroite de la
rondelle 5 de façon à la ramener coaxiale au raccord, et tirer

- 4 -        0163561

sur le tube tout en maintenant droite la rondelle.

La Figure 5 montre une variante dans laquelle les deux tubes 6 et 6' sont maintenus dans le corps 1 du raccord par une rondelle excentrée respectivement 5 et 5'.

Revendications.

1. - Raccord de conduit

caractérisé en ce qu'il comprend un corps creux (1) comportant
un alésage cylindrique dont l'une des portions d'extrémité au
moins est lisse et est élargie en (1e) au voisinage de son extrémité extérieure, cette partie élargie étant coaxiale à l'alésage, une gorge annulaire (1g) également coaxiale à l'alésage
étant ménagée dans cette partie élargie (1e), un joint d'étanchéité (3), une rondelle d'appui (4), et une rondelle de blocage (5) pouvant être introduites dans ladite partie élargie
(1e), et en ce que la rondelle de blocage (5) a une largeur inférieure à celle de la gorge, une forme et des dimensions lui
permettant de s'engager dans la partie élargie (1e) de l'alésage,
et comporte un profil intérieur excentré (5b) dont le diamètre
est sensiblement égal au diamètre extérieur du tube (6) à relier
et qui est disposé de manière à être coaxial au corps (1) de
raccord lorsque la rondelle (5) est engagée dans la gorge (1g)
et au contact de la paroi de celle-ci par sa partie large.

2. - Raccord selon la revendication 1,

caractérisé en ce que le corps (1) comporte un épaulement intérieur (1d) formant butée pour le tube lors de sa mise en place.

FIG.1

FIG. 2

FIG. 3

## FIG. 4

## FIG. 5

Office européen des brevets

**0163561**

Numéro de la demande

**RAPPORT DE RECHERCHE EUROPEENNE**

EP 85 40 0813

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 899 200 (GAMBLE)<br>* En entier * | 1,2 | F 16 L 37/10<br>F 16 L 37/24 |
| | --- | | |
| X | US-A-4 372 586 (ROSENBERG et al.)<br>* Résumé; figures 1-10 * | 1,2 | |
| | --- | | |
| A | US-A-4 163 573 (YANO)<br>* Figures 1-6 * | 1,2 | |
| | --- | | |
| A | FR-A-2 032 897 (K. BENGESSER et al.)<br>* Figures 1-17 * | 1,2 | |
| | ----- | | |

DOMAINES TECHNIQUES
RECHERCHES (Int. Cl.4)

F 16 L

Le présent rapport de recherche a été établi pour toutes les revendications

| Lieu de la recherche | Date d'achèvement de la recherche | Examinateur |
|---|---|---|
| LA HAYE | 31-07-1985 | ANGIUS P. |